# EUROPÄISCHE PATENTSCHRIFT

(11) **EP 2 917 259 B1**
(45) Veröffentlichungstag und Bekanntmachung des Hinweises auf die Patenterteilung: **09.12.2020**
(21) Anmeldenummer: 13786220.7
(22) Anmeldetag: 31.10.2013
(51) Int. Cl.: C08G 59/04

(54) **DIGLYCIDYLETHER VON 2-PHENYL-1,3-PROPANDIOL-DERIVATEN UND DEREN OLIGOMERE ALS HÄRTBARE EPOXIDHARZE**
DIGLYCIDYL ETHER OF 2-PHENYL-1,3-PROPANDIOL DERIVATIVES AND ITS OLIGOMERS AS CURABLE EPOXY RESINS
DIGLYCIDYLÉTHER DE DÉRIVÉS DE 2-PHÉNYL-1,3-PROPANDIOL ET LEURS OLIGOMÈRES COMME RÉSINE ÉPOXY DURCISSABLE

(30) Priorität: 08.11.2012 EP 12191862
(43) Veröffentlichungstag der Anmeldung: 16.09.2015
(73) Patentinhaber: BASF SE, 67056 Ludwigshafen am Rhein (DE)
(72) Erfinder: KARL, Ulrich, 67269 Grünstadt (DE); CHARRAK, Monika, 67063 Ludwigshafen (DE); THOMAS, Hans-Josef, 41352 Korschenbroich (DE); NICOLAS, Marion, 68161 Mannheim (DE)
(74) Vertreter: BASF IP Association
(86) Internationale Anmeldenummer: PCT/EP2013/072758
(87) Internationale Veröffentlichungsnummer: WO 2014/072216

(56) Entgegenhaltungen:
- US-A1- 2009 264 669
- US-A1- 2012 130 040

## Beschreibung

Die vorliegende Erfindung betrifft 2-Phenyl-1,3-propandiol-Diglycidylether-Derivate, Verfahren zu deren Herstellung sowie deren Verwendung zur Herstellung von Klebstoffen, Verbundwerkstoffen, Formkörpern oder Beschichtungen. Die vorliegende Erfindung betrifft weiter härtbare Epoxidharz-Zusammensetzungen umfassend eine Härterkomponente und eine Harzkomponente, die mindestens ein 2-Phenyl-1,3-propandiol-Diglycidylether-Derivat oder ein darauf basierendes Oligomer als Polyepoxidverbindung enthält, sowie Verfahren zur Härtung dieser härtbaren Epoxidharz-Zusammensetzungen und durch Härtung dieser härtbaren Epoxidharz-Zusammensetzung erhältliche bzhw. erhaltene gehärtete Epoxidharze.

Als Epoxidharze bezeichnet man üblicherweise oligomere Verbindungen mit im Mittel mehr als einer Epoxidgruppe pro Molekül, die durch Umsetzung mit geeigneten Härtern oder durch Polymerisation der Epoxidgruppen in Duroplaste bzw. gehärtete Epoxidharze umgewandelt werden. Gehärtete Epoxidharze sind aufgrund ihrer hervorragenden mechanischen und chemischen Eigenschaften, wie hohe Schlagzähigkeit, hohe Abriebfestigkeit, gute Hitze- und Chemikalienbeständigkeit, insbesondere eine hohe Beständigkeit gegenüber Laugen, Säuren, Ölen und organischen Lösungsmitteln, hohe Witterungsbeständigkeit, ausgezeichnete Haftfähigkeit auf vielen Werkstoffen und hohes elektrisches Isolationsvermögen, weit verbreitet. Sie dienen als Matrix für Faserverbundwerkstoffe ("Composites") und sind oft Hauptbestandteil in Elektrolaminaten, Strukturklebstoffen, Gießharzen, Beschichtungen und Pulverlacken.

Die meisten kommerziellen (ungehärteten) Epoxidharze werden durch Kupplung von Epichlorhydrin an Verbindungen, die wenigstens zwei reaktive Wasserstoffatome besitzen, wie Polyphenole, Mono- und Diamine, Aminophenole, heterocyclische Imide und Amide, aliphatische Diole oder Polyole oder dimere Fettsäuren, hergestellt. Epoxidharze, die sich von Epichlorhydrin ableiten, werden als Glycidyl-basierte Harze bezeichnet. In der Regel werden Bisphenol-A- oder Bisphenol-F-Diglycidylether bzw. die entsprechenden Oligomere als Epoxidharze eingesetzt.

Insbesondere an Beschichtungen von Behältern für die Lagerung von Lebensmitteln und Getränken werden hohe Anforderungen gestellt. So soll die Beschichtung stark sauren oder salzhaltigen Lebensmitteln (z.B. Tomaten) oder Getränken widerstehen, damit keine Korrosion des Metalls eintritt, die wiederum zur Kontamination des Füllguts führen könnte. Andererseits darf die Beschichtung nicht den Geschmack oder das Aussehen der Lebensmittel beeinträchtigen. Da während der Herstellung der Behälter oft bereits beschichtete Behälter weiter geformt werden, muss die Beschichtung flexibel sein. Viele Füllgüter, z.B. Lebensmittel, werden erst in der Dose pasteurisiert; daher muss die Beschichtung eine Erhitzung auf 121 °C mindestens 2 Stunden unbeschädigt und ohne Migration von Inhaltsstoffen überstehen.

Die Verwendung von Epoxidharzen auf Basis von Bisphenol-A- oder Bisphenol-F-diglycidylether wird in zunehmend mehr Bereichen als problematisch identifiziert, da die entsprechenden Diole wegen ihrer endokrinen Wirkung als problematisch angesehen werden.

Zur Lösung dieses Problems sind verschiedene Vorschläge gemacht worden:
US 2012/0116048 offenbart ein Bisphenol-A (BPA) und Bisphenol-F (BPF) freies Polymer, das neben Esterbindungen auch Hydroxyetherbrücken umfasst, wobei Diepoxide zum Einsatz kommen, die auf offenkettige aliphatische Diole wie Neopentylglykol (NPG), einfache cycloaliphatische Diole wie 1,4-Cyclohexandimethanol oder aromatische Diole wie Resorcin basieren. Erfahrungsgemäß ergeben die beschriebenen aliphatischen und cycloaliphatischen Diole jedoch sehr weiche und wenig temperatur- und chemikalienbeständige Beschichtungen.
WO 2012/089657 offenbart eine BPA-freie Zubereitung aus einem filmbildenden Harz sowie einem Adhäsionspromotor. Als Harz wird ein epoxidiertes Harz hergestellt beispielsweise aus den Diglycidylethern von NPG, Ethylenglycol, Propylen- oder Dipropylenglycol, 1,4-Butandiol oder 1,6-Hexandiol. Hier sind die gleichen Einschränkungen der Beschichtungseigenschaften wie im vorigen Beispiel zu erwarten.
US 2012/0130040 und US 2009/0264669 erwähnen unter anderem Diglycidylether des 2-Phenyl-1,2-propandiols und dessen Verwendung als härtbares Epoxid, ohne etwaige Details der Herstellung einer solchen Verbindung sowie dessen Härtung zu offenbaren.
WO 2010/100122 schlägt ein Beschichtungssystem vor, das erhältlich ist durch Umsetzung eines epoxidierten Pflanzenöls mit hydroxyfunktionellen Verbindungen wie z.B. Propylenglycol, Propan-1,3-diol, Ethylenglycol, NPG, Trimethylolpropan, Diethylenglycol u.a.
US 2004/0147638 beschreibt ein 2-Schichten (Kern/Hülle)-System, bei dem der Kern aus einem BPA- oder BPF-basierten Epoxidharz, die Deckschicht z.B. aus einem Acrylatharz gebildet wird. Kritisch ist hier, ob die Deckschicht wirklich vollständig die Migration von BPA oder Bisphenol-A-Diglycidylether (BADGE) in das Füllgut verhindern kann.
WO 2012/091701 schlägt verschiedene Diole bzw. deren Diglycidylether als Ersatz für BPA bzw. BADGE für Epoxidharze vor, unter anderem Derivate von BPA und kernhydriertem BPA, alicyclische Diole auf Basis von Cyclobutan sowie Diole mit einem Furanring als Grundstruktur.

Der vorliegenden Erfindung lag die Aufgabe zugrunde, monomere bzw. oligomere Diglycidylether-Verbindungen für die Verwendung in Epoxidharz-Systemen bereitzustellen, insbesondere als zumindest partieller Ersatz von BADGE in entsprechenden Epoxidharz-Systemen, vor allem für den Einsatz zur Beschichtung von Behältern.

Entsprechend betrifft die vorliegende Erfindung 2-Phenyl-1,3-propandiol-Diglycidylether-Derivate (PPD-DGE-Derivate) der Formel I 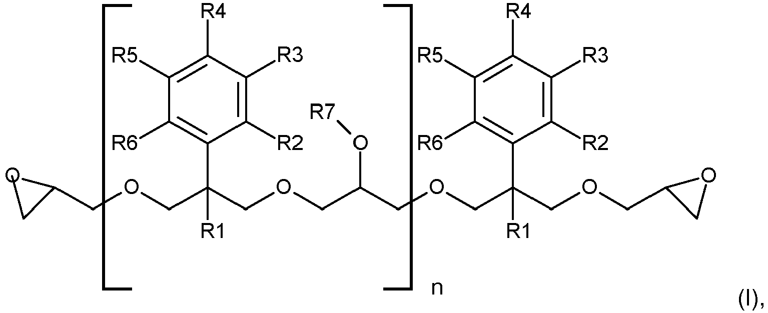 wobei
R1 eine Alkyl-Gruppe oder eine Aryl-Gruppe, bevorzugt eine Alkyl-Gruppe mit 1 bis 5 C-Atomen oder eine Aryl-Gruppe mit 6 bis 10 C-Atomen, besonders bevorzugt eine Methyl-Gruppe ist, R2 bis R6 unabhängig voneinander ein Wasserstoff-Atom oder eine Alkyl-Gruppe mit 1 bis 4 C-Atomen ist,
R7 ein Wasserstoff-Atom oder eine Glycidyl-Gruppe ist, und
n = 0 bis 30 ist.

Bei PPD-DGE-Derivaten der Formel I, die zwei oder mehr R7-Reste aufweisen ist R7 jeweils unabhängig voneinander ein Wasserstoff-Atom oder eine Glycidyl-Gruppe.

Alkyl-Gruppen im Sinne der Erfindung besitzen 1 bis 20 C-Atome. Sie können linear, verzweigt oder cyclisch sein. Bevorzugt weisen sie keine Substituenten mit Heteroatomen auf. Heteroatome sind alle Atome außer C- und H-Atome.

Aryl-Gruppen im Sinne der Erfindung besitzen 6 bis 20 C-Atome. Bevorzugt weisen sie keine Substituenten mit Heteroatomen auf. Heteroatome sind alle Atome außer C- und H-Atome.

Eine Ausführungsform der Erfindung betrifft oligomere PPD-DGE-Derivate der Formel I mit n = 1 bis 30. Unter einem oligomerem PPD-DGE-Derivat der Formel I im Sinne der Erfindung ist auch ein Gemisch von oligomeren PPD-DGE-Derivaten mit verschiedenen n und unterschiedlichen Substitutionsmustern für R7 (Wasserstoff-Atom oder Glycidyl-Gruppe) zu verstehen.

Eine Ausführungsform der Erfindung betrifft monomere PPD-DGE-Derivate der Formel I mit n = 0.

Eine Ausführungsform der Erfindung betrifft Gemische aus monomeren und oligomeren PPD-DGE-Derivaten der Formel I.

Eine Ausführungsform der Erfindung betrifft 2-Phenyl-1,3-propandiol-Diglycidylether-Derivate der Formel I, bei denen R1 eine Alkyl-Gruppe mit 1 bis 4 C-Atomen, bevorzugt eine Methyl-Gruppe ist und R2 bis R7 und n wie oben definiert sind. Sie betrifft insbesondere 2-Phenyl-1,3-propandiol-Diglycidylether-Derivate der Formel I, bei denen R1 eine Alkyl-Gruppe mit 1 bis 4 C-Atomen, bevorzugt eine Methyl-Gruppe und R2 bis R6 je ein Wasserstoff-Atom sind, n = 0 bis 30 ist und R7 wie oben definiert ist (monomerer bzw. oligomere 2-Alkyl-2-phenyl-1,3-propandiol-Diglycidylether bzw. momerer bzw. oligomere 2-Methyl-2-phenyl-1,3-propandiol-Diglycidylether).

Bevorzugte Ausführungsformen der Erfindung sind monomerer 2-Methyl-2-Phenyl-1,3-propandiol-Diglycidylether (MPPD-DGE) entsprechend der Formel I bei dem R1 eine Methyl-Gruppe und R2 bis R6 je ein Wasserstoff-Atom sind und n = 0 ist, sowie oligomere MPPD-DGE entsprechend der Formel I bei denen R1 eine Methyl-Gruppe und R2 bis R6 je ein Wasserstoff-Atom sind, n = 1 bis 30 ist und R7 ein Wasserstoff-Atom oder eine Glycidyl-Gruppe (unabhängig voneinander) ist, sowie Gemische von monomerem und oligomeren MPPD-DGE.

Die vorliegende Erfindung betrifft weiter ein Verfahren zur Herstellung von PPD-DGE-Derivaten der Formel I umfassend die Umsetzung der entsprechenden 2-Phenyl-1,3-propandiol-Derivate (PPD-Derivate) der Formel II 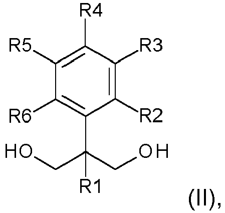 wobei
R1 bis R6 die gleiche Bedeutung haben wie für die PPD-DGE-Derivate der Formel I, mit Epichlorhydrin.

Bei der Reaktion entsteht in der Regel ein Gemisch aus monomerem und oligomerem PPD-DGE-Derivat. Der Anteil an monomerem PPD-DGE-Derivat ist größer, je höher der Überschuss an eingesetztem Epichlorhydrin ist. Monomere PPD-DGE-Derivate können mittels dem Fachmann bekannten Trennmethoden wie beispielsweise chromatographische, extraktive oder destillative Verfahren von den oligomeren PPD-DGE-Derivate getrennt werden.

In einer besonderen Ausführungsform werden 1 bis 20 Äquivalenten, bevorzugt 2 bis 10 Äquivalente Epichlorhydrin für die Herstellung der PPD-DGE-Derivate der Formel I eingesetzt. Die Reaktion erfolgt üblicherweise in einem Temperaturbereich von -10°C bis 120°C, bevorzugt 20°C bis 60°C. Zur Beschleunigung der Umsetzung können Basen wie wässrige oder alkoholische Lösungen bzw. Dispersionen anorganischer Salze, wie z.B. LiOH, NaOH, KOH, Ca(OH)₂ oder Ba(OH)₂ zugegeben werden. Darüber hinaus können geeignete Katalysatoren wie tertiäre Amine eingesetzt werden.

In einer anderen besonderen Ausführungsform erfolgt die erfindungsgemäße Umsetzung der PPD-Derivate der Formel II zu den entsprechenden PPD-DGE-Derivate der Formel I mit 1 bis 20, vorzugsweise mit 1 bis 10 Äquivalenten Epichlorhydrin bei einer Temperatur in einem Bereich von 20°C bis 180°C, vorzugsweise von 70°C bis 150°C in Gegenwart einer Lewis-Säure als Katalysator, vorzugsweise in Gegenwart von Zinn(IV)chlorid oder Bortrifluorid-Addukten wie Bortrifluorid-Etheraten. Anschließend wird das Reaktionsgemisch mit einer Base (bspw. verdünnte Natronlauge) versetzt und für eine weitere Zeitspanne (bspw. 1 bis 5 h) erhitzt (bspw. unter Rückfluss). Danach kann das Produkt mittels Phasentrennung und Waschschritten mit Wasser isoliert werden.

Die vorliegende Erfindung betrifft weiter Verfahren zur Herstellung von PPD-DGE-Derivat-basierten Oligomeren durch Umsetzung von monomeren PPD-DGE-Derivaten der Formel I mit Diolen (Kettenverlängerung). Dazu wird monomeres PPD-DGE-Derivat der Formel I (n = 0) oder ein Gemisch von mehreren PPD-DGE-Derivaten der Formel I mit verschiedenen n, wobei überwiegend n = 0 ist, mit einem oder mehreren Diolen umgesetzt. Vorzugsweise enthält dieses Gemisch von mehreren PPD-DGE-Derivaten der Formel I zu mindestens 60 Gew.-% das monomere PPD-DGE-Derivat (n = 0). Vorzugsweise werden dazu 0,01 bis 0,95, besonders bevorzugt 0,05 bis 0,8, insbesondere 0,1 bis 0,4 Äquivalente des Diols bezogen auf das eingesetzte PPD-DGE-Derivat eingesetzt. Vorzugsweise wird durch einen unterstöchiometrischen Einsatz des Diols bzw. der Diole erreicht, dass das resultierende PPD-DGE-Derivat-basierte Oligomer im Mittel mehr als 1 bevorzugt mehr als 1,5 besonders bevorzugt mehr als 1,9 Epoxidgruppen pro Molekül aufweist. Die Reaktion erfolgt üblicherweise in einem Temperaturbereich von 50°C bis 200°C, bevorzugt 60°C bis 160°C. Geeignete Diole sind typischerweise aromatische, cycloaliphatische oder aliphatische Dihydroxyverbindungen, beispielsweise Furandimethanol, kernhydriertes Bisphenol A, kernhydriertes Bisphenol F, Neopentylglykol, Bisphenol A, Bisphenol F oder Bisphenol S, bevorzugt Furandimethanol, kernhydriertes Bisphenol A oder kernhydriertes Bisphenol F.

Entsprechend sind Gegenstand der vorliegenden Erfindung auch PPD-DGE-Derivat-basierte Oligomere, die erhältlich sind bzw. erhalten werden, durch Umsetzung eines monomeren PPD-DGE-Derivat der Formel I (n = 0) oder eines Gemisch von mehreren PPD-DGE-Derivaten der Formel I mit verschiedenen n, wobei überwiegend n = 0 ist, mit einem oder mehreren Diolen. Vorzugsweise enthält dieses Gemisch von mehreren PPD-DGE-Derivaten der Formel I zu mindestens 60 Gew.-% das monomere PPD-DGE-Derivat (n = 0). In einer besonderen Ausführungsform sind die eingesetzten ein oder mehreren Diole nicht identisch ist mit dem den PPD-DGE-Derivaten der Formel I entsprechenden PPD-Derivat der Formel II, wodurch PPD-DGE-Derivat-basierte Mischoligomere erhältlich sind bzw. erhalten werden.

Die vorliegende Erfindung betrifft in einer besonderen Ausführungsform Verfahren zur Herstellung von PPD-DGE-Derivat-basierte Oligomeren ausgehend von monomeren PPD-DGE-Derivaten der Formel I, wobei das monomere PPD-DGE-Derivat der Formel I (n = 0) oder ein Gemisch von mehreren PPD-DGE-Derivaten der Formel I mit verschiedenen n, wobei überwiegend n = 0 ist, mit dem entsprechenden PPD-Derivat der Formel II umgesetzt wird. Vorzugsweise enthält dieses Gemisch von mehreren PPD-DGE-Derivaten der Formel I zu mindestens 60 Gew.-% das monomere PPD-DGE-Derivat (n = 0). Vorzugsweise werden dazu 0,01 bis 0,95 insbesondere 0,1 bis 0,4 Äquivalente des PPD-Derivats der Formel II bezogen auf das eingesetzte PPD-DGE-Derivat der Formel I eingesetzt. Vorzugsweise wird durch einen unterstöchiometrischen Einsatz des PPD-Derivats der Formel II erreicht, dass das resultierende PPD-DGE-Derivat-basierte Oligomer im Mittel mehr als 1 bevorzugt mehr als 1,5 besonders bevorzugt mehr als 1,9 Epoxidgruppen pro Molekül aufweist. Die Reaktion erfolgt üblicherweise in einem Temperaturbereich von 50°C bis 200°C, bevorzugt 60°C bis 160°C.

In analoger Weise können auch gezielt höhermolekulare oligomere PPD-DGE-Derivate der Formel I ausgehend von oligomeren PPD-DGE-Derivaten der Formel I mit geringerem Oligomerisierungsgrad hergestellt werden.

Die vorliegende Erfindung betrifft auch härtbare Epoxidharz-Zusammensetzungen umfassend eine Härterkomponente, die mindestens einen Härter enthält, und eine Harzkomponente, die mindestens eine PPD-DGE-Derivat-basierte Polyepoxidverbindung ausgewählt aus der Gruppe bestehend aus PPD-DGE-Derivaten der Formel I (monomer und/oder oligomer) und PPD-DGE-Derivat basiertes Mischoligomer enthält.

Vorzugsweise betrifft die vorliegende Erfindung härtbare Epoxidharz-Zusammensetzungen umfassend eine Härterkomponente, die mindestens einen Härter enthält, und eine Harzkomponente, die mindestens eine PPD-DGE-Derivat-basierte Polyepoxidverbindung ausgewählt aus der Gruppe bestehend aus PPD-DGE-Derivaten der Formel I (monomer und/oder oligomer) enthält.

In einer besonderen Ausführungsform betrifft die vorliegende Erfindung härtbare Epoxidharz-Zusammensetzungen umfassend eine Härterkomponente, die mindestens einen Härter enthält, und eine Harzkomponente, die mindestens ein oligomeres PPD-DGE-Derivat der Formel I (n = 1 bis 30) enthält, wobei das Epoxidäquivalent (EEW) der eingesetzten oligomeren PPD-DGE-Derivate der Formel I im statistischen Mittel zwischen 130 und 3000 g/mol, insbesondere zwischen 140 und 1000 g/mol liegt.

In einer besonderen Ausführungsform weist die erfindungsgemäße härtbare Epoxidharz-Zusammensetzung weniger als 40 Gew.-%, bevorzugt weniger als 10 Gew.-%, besonders bevorzugt weniger als 5 Gew.-%, insbesondere weniger als 1 Gew.-% Bisphenol A oder F basierte Verbindungen bezogen auf die gesamte Harzkomponente auf. Bevorzugt ist die erfindungsgemäße härtbare Epoxidharz-Zusammensetzung frei von Bisphenol A oder F basierten Verbindungen. Bisphenol A oder F basierte Verbindungen im Sinne der vorliegenden Erfindung sind Bisphenol A und F selbst, deren Diglycidylether, sowie darauf basierende Oligo- oder Polymere.

In einer besonderen Ausführungsform der erfindungsgemäßen härtbaren Epoxidharz-Zusammensetzung machen die erfindungsgemäßen PPD-DGE-Derivat-basierten Polyepoxidverbindungen insgesamt einen Anteil von mindestens 40 Gew.-%, bevorzugt mindestens 60 Gew.-%, insbesondere mindestens 80 Gew.-% bezogen auf die gesamte Harzkomponente aus.

Die erfindungsgemäßen Verbindungen der Formel I sind auch geeignet zur Verwendung als Reaktivverdünner, insbesondere als Reaktivverdünner für BADGE-, Bisphenol-F-Diglycidylether-, Tetraglycidylmethylendianilin-, Kresol-, Novolak- oder Triglycidylaminophenole-basierte Epoxidharze, da sie geeignet sind, die Viskosität von anderen Epoxidharzen, insbesondere BADGE-, Bisphenol-F-Diglycidylether -, Tetraglycidylmethylendianilin-, Kresol-, Novolak- oder Triglycidylaminophenole-basierten Epoxidharzen, in der Harzkomponente und in der härtbaren Zusammensetzung herabzusetzen. Vorteilhafterweise führt der Zusatz der erfindungsgemäßen Verbindungen der Formel I als Reaktivverdünner zu einer vergleichsweise geringen Reduzierung der Glasübergangstemperatur.

Entsprechend betrifft die vorliegende Erfindung in einer besonderen Ausführungsform härtbare Zusammensetzungen, umfassend eine Härterkomponente, die mindestens einen Härter enthält, und eine Harzkomponente, die mindestens eine PPD-DGE-Derivat-basierte Polyepoxidverbindung, ausgewählt aus der Gruppe bestehend aus PPD-DGE-Derivaten der Formel I (monomer), und mindestens ein Epoxidharz, ausgewählt aus der Gruppe bestehend aus Diglycidylether von Bisphenol A, Diglycidylether von Bisphenol F (BFDGE), Diglycidylether von kernhydriertem Bisphenol A, Diglycidylether von kernhydriertem Bisphenol F, Tetraglycidylmethylendianilin, Kresol-Epoxidharz, Novolak-Epoxidharz und Triglycidylaminophenole und deren Oligomere, enthält. Dabei macht die mindestens eine PPD-DGE-Derivat-basierte Polyepoxidverbindung insgesamt vorzugsweise einen Anteil bis 30 Gew.-%, besonders bevorzugt bis 25 Gew.-%, insbesondere von 1 bis 20 Gew.-%, besonders von 2 bis 20 Gew.-%, ganz besonders von 5 bis 15 Gew.-% bezogen auf die Harzkomponente (Epoxidharz(e) und PPD-DGE-Derivat-basierte Polyepoxidverbindung(en)) der härtbaren Zusammensetzung aus.

Entsprechend betrifft die vorliegende Erfindung auch eine Harzkomponente, umfassend mindestens eine PPD-DGE-Derivat-basierte Polyepoxidverbindung, ausgewählt aus der Gruppe bestehend aus PPD-DGE-Derivaten der Formel I (monomer), und mindestens ein Epoxidharz, ausgewählt aus der Gruppe bestehend aus Diglycidylether von Bisphenol A, Diglycidylether von Bisphenol F (BFDGE), Diglycidylether von kernhydriertem Bisphenol A, Diglycidylether von kernhydriertem Bisphenol F, Tetraglycidylmethylendianilin, Kresol-Epoxidharz, Novolak-Epoxidharz und Triglycidylaminophenole und deren Oligomere. Dabei macht die mindestens eine PPD-DGE-Derivat-basierte Polyepoxidverbindung vorzugsweise einen Anteil bis 30 Gew.-%, besonders bevorzugt bis 25 Gew.-%, insbesondere von 1 bis 20 Gew.-%, besonders von 2 bis 20 Gew.-%, ganz besonders von 5 bis 15 Gew.-% bezogen auf die Harzkomponente (Epoxidharz(e) und PPD-DGE-Derivat-basierte Polyepoxidverbindung(en)) der härtbaren Zusammensetzung aus.

In einer bevorzugten Ausführungsform der erfindungsgemäßen härtbaren Epoxidharz-Zusammensetzung macht die gesamte Harzkomponente mindesten 10 Gew.-%, insbesondere mindestens 25 Gew.-% bezogen auf die gesamte härtbare Epoxidharz-Zusammensetzung aus.

Im Sinne der vorliegenden Erfindung sind alle Epoxidverbindungen und nur die Epoxidverbindungen der härtbaren Epoxidharz-Zusammensetzung der Harzkomponente zuzurechnen. Epoxidverbindungen im Sinne der vorliegenden Erfindung sind Verbindungen mit mindestens einer Epoxidgruppe, also beispielsweise auch entsprechende Reaktivverdünner.

Vorzugsweise weisen die Epoxidverbindungen der Harzkomponente im statistischen Mittel mindestens 1,1, bevorzugt mindestens 1,5, insbesondere mindestens 1,9 Epoxidgruppen pro Molekül auf.

Härter im Sinne der Erfindung sind Verbindungen, die geeignet sind, eine Vernetzung der erfindungsgemäßen PPD-DGE-Derivat-basierten Polyepoxidverbindungen zu bewirken.

Durch Umsetzung mit Härtern können Polyepoxidverbindungen in nicht schmelzbare, dreidimensional "vernetzte", duroplastische Materialien überführt werden.

Bei der Härtung von Epoxidharzen unterscheidet man zwischen zwei Härtungstypen. Im ersten Fall weist der Härter wenigstens zwei funktionellen Gruppen auf, welche mit den Oxiran- und/oder Hydroxygruppen der Polyepoxidverbindungen unter Ausbildung kovalenter Bindungen reagieren können (Polyadditionsreaktion). Beim Aushärten kommt es dann zur Ausbildung eines polymeren Netzwerkes aus miteinander kovalent verknüpften von den Polyepoxidverbindungen abstammenden Einheiten und von den Härtermolekülen abstammenden Einheiten, wobei der Grad der Vernetzung über die relativen Mengen der funktionellen Gruppen im Härter und in der Polyepoxidverbindung gesteuert werden kann. Im zweiten Fall wird eine Verbindung eingesetzt, welche die Homopolymerisation von Polyepoxidverbindungen untereinander bewirkt. Derartige Verbindungen werden häufig auch als Initiator oder Katalysator bezeichnet. Homopolymerisation induzierende Katalysatoren sind Lewis-Basen (anionische Homopolymerisation; anionisch härtende Katalysatoren) oder Lewis-Säuren (kationische Homopolymerisation; kationisch härtenden Katalysatoren). Sie bewirken die Ausbildung von Etherbrücken zwischen den Epoxidverbindungen. Es wird angenommen, dass der Katalysator mit einer ersten Epoxidgruppe unter Ringöffnung reagiert, wobei eine reaktive Hydroxygruppe entsteht, die wiederum mit einer weiteren Epoxidgruppe unter Ausbildung einer Etherbrücke reagiert, was zu einer neuen reaktiven Hydroxygruppe führt. Aufgrund dieses Reaktionsmechanismus genügt der unterstöchiometrische Einsatz solcher Katalysatoren zur Aushärtung. Imidazol ist ein Beispiel für einen Katalysator, der eine anionische Homopolymerisation von Epoxidverbindungen induziert.

Bortrifluorid ist ein Beispiel für einen Katalysator, der eine kationische Homopolymerisation auslöst. Auch Mischungen aus verschiedenen Polyadditionsreaktion eingehenden Härtern und Mischungen aus Homopolymerisation induzierenden Härtern, sowie Mischungen aus Polyadditionsreaktion eingehenden und Homopolymerisation induzierenden Härtern können zur Härtung von Polyepoxidverbindungen eingesetzt werden.

Geeignete funktionelle Gruppen, die mit den Oxirangruppen von Polyepoxidverbindungen (Epoxidharzen) eine Polyadditionsreaktion eingehen können, sind beispielsweise Aminogruppen, Hydroxygruppen, Thioalkohole bzw. Derivate davon, Isocyanate und Carboxylgruppen bzw. Derivate davon, wie Anhydride. Dementsprechend werden üblicherweise als Härter für Epoxidharze aliphatische, cycloaliphatische und aromatische Polyamine, Carbonsäureanhydride, Polyamidoamine, Aminoplaste wie z.B. Formaldehydkondensationsprodukte von Melamin, Harnstoff, Benzoguanamin oder Phenoplaste wie z.B. Novolake, eingesetzt. Auch oligomere oder polymere Härter auf Acrylatbasis mit Hydroxy- oder Glycidylfunktionen in der Seitenkette sowie Epoxyvinylesterharze werden verwendet. Dem Fachmann ist bekannt, für welche Anwendungen ein schnell oder langsam wirkender Härter eingesetzt wird. So wird er beispielsweise für lagerstabile Einkomponenten-Formulierungen einen sehr langsam (bzw. erst bei höherer Temperatur) wirkenden Härter verwenden. Gegebenenfalls wird man einen Härter verwenden, der erst unter Anwendungsbedingungen als aktive Form freigesetzt wird, beispielsweise Ketimine oder Aldimine. Bekannte Härter besitzen eine lineare oder höchstens schwach vernetzte Struktur. Sie sind beispielsweise in Ullmann's Encyclopedia of Industrial Chemistry, 5. Auflage auf CD-ROM, 1997, Wiley-VCH, Kapitel "Epoxy Resins" beschrieben, worauf hiermit in vollem Umfang Bezug genommen wird.

Geeignete Härter für die erfindungsgemäße härtbare Epoxidharz-Zusammensetzung sind beispielsweise Polyphenole, Polycarbonsäuren, Polymerkaptane, Polyamine, primäre Monoamine, Sulfonamide, Aminophenole, Aminocarbonsäuren, Carbonsäureanyhdride, phenolische Hydroxygruppen enthaltende Carbonsäuren, Sulfanilamide, sowie Mischungen davon. Im Rahmen dieser Erfindung sei unter den jeweiligen Poly-Verbindungen (z.B. Polyamin) auch die entsprechenden Di-Verbindungen (z.B. Diamin) zu verstehen.

Bevorzugte Härter für die erfindungsgemäße härtbare Epoxidharz-Zusammensetzung sind Aminohärter und Phenolharze.

In einer besonderen Ausführungsform beinhaltet die erfindungsgemäße härtbare Epoxidharz-Zusammensetzung einen Aminohärter als Härter. Für die Polyadditionsreaktion geeignete Aminohärter sind Verbindungen, die mindestens zwei sekundäre oder mindestens eine primäre Aminogruppe besitzen. Durch die Verknüpfung der Aminogruppen des Aminohärters mit den Epoxidgruppen der Polyepoxidverbindung bilden sich Polymere, deren Einheiten von den Aminohärtern und den Polyepoxidverbindungen stammen. Aminohärter werden daher in der Regel im stöchiometrischem Verhältnis zu den Epoxidverbindungen eingesetzt. Wenn der Aminohärter beispielsweise zwei primäre Aminogruppen hat, also mit bis zu vier Epoxidgruppen koppeln kann, können vernetzte Strukturen entstehen.

Die Aminohärter der erfindungsgemäßen härtbaren Epoxidharz-Zusammensetzung besitzen mindestens eine primäre Aminogruppe oder zwei sekundäre Aminogruppen. Ausgehend von Polyepoxidverbindungen mit mindestens zwei Epoxidgruppen kann mit einer Aminoverbindung mit mindestens zwei Aminofunktionen eine Härtung durch eine Polyadditionsreaktion (Kettenverlängerung) erfolgen. Dabei entspricht die Funktionalität einer Aminoverbindung ihrer Anzahl an NH-Bindungen. Eine primäre Aminogruppe hat somit eine Funktionalität von 2, während eine sekundäre Aminogruppe eine Funktionalität von 1 hat. Durch die Verknüpfung der Aminogruppen des Aminohärters mit den Epoxidgruppen der Polyepoxidverbindung bilden sich Polymere aus dem Aminohärter und der Polyepoxidverbindung, wobei die Epoxidgruppen zu freien OH-Gruppen umgesetzt werden. Bevorzugt werden Aminohärter verwendet, mit einer Funktionalität von mindestens 3 (beispielsweise mindestens 3 sekundäre Aminogruppen oder mindestens eine primäre und eine sekundäre Aminogruppe), insbesondere solche mit zwei primären Aminogruppen (Funktionalität von 4).

Bevorzugte Aminohärter sind Dimethyldicykan (DMDC), Dicyandiamid (DICY), Isophorondiamin (IPDA), Diethylentriamin (DETA), Triethylentetramin (TETA), Bis(p-aminocyclohexyl)methan (PACM), Methylendianilin (bspw. 4,4'-Methylendianilin), Polyetheramine, bspw. Polyetheramin D230, Diaminodiphenylmethan (DDM), Diaminodiphenylsulfon (DDS), 2,4-Toluoldiamin, 2,6-Toluoldiamin, 2,4-Diamino-1-methylcyclohexan, 2,6-Diamino-1-methylcyclohexan, 2,4-Diamino-3,5-diethyltoluol, 2,6-Diamino-3,5-diethyltoluol, 1,2-Diaminobenzol, 1,3-Diaminobenzol, 1,4-Diaminobenzol, Diaminodiphenyloxid, 3,3',5,5'-Tertramethyl-4,4'-diaminodiphenyl und 3,3'-Dimethyl4,4'-diaminodiphenyl, sowie Aminoplaste wie z.B. Kondensationsprodukte von Aldehyden wie Formaldehyd, Acetaldehyd, Crotonaldehyd oder Benzaldehyd mit Melamin, Harnstoff oder Benzoguanamin sowie Gemisch davon. Besonders bevorzugte Aminohärter für die erfindungsgemäße härtbare Zusammensetzung sind Dimethyldicykan (DMDC), Dicyandiamid (DICY), Isophorondiamin (IPDA) und Methylendianilin (bspw. 4,4'-Methylendianilin) sowie Aminoplaste wie z.B. Kondensationsprodukte von Aldehyden wie Formaldehyd, Acetaldehyd, Crotonaldehyd oder Benzaldehyd mit Melamin, Harnstoff oder Benzoguanamin.

Vorzugsweise werden bei der erfindungsgemäßen härtbaren Epoxidharz-Zusammensetzung Polyepoxidverbindung und Aminohärter in einem bezogen auf die Epoxid- bzw. die Aminofunktionalität in etwa stöchiometrischem Verhältnis eingesetzt. Besonders geeignete Verhältnisse von Epoxidgruppen zu Aminofunktionalität sind beispielsweise 1 : 0,8 bis 0,8 : 1.

In einer besonderen Ausführungsform beinhaltet die erfindungsgemäße härtbare Epoxidharz-Zusammensetzung ein Phenolharz als Härter. Für die Polyadditionsreaktion geeignete Phenolharze besitzen mindestens zwei Hydroxylgruppen. Durch die Verknüpfung der Hydroxylgruppen des Phenolharzes mit den Epoxidgruppen der Polyepoxidverbindung bilden sich Polymere, deren Einheiten von den Phenolharzen und den Polyepoxidverbindungen stammen. Phenolharze können in der Regel sowohl im stöchiometrischen als auch im substöchiometrischen Verhältnis zu den Epoxidverbindungen eingesetzt. Bei Einsatz substöchiometrischer Mengen des Phenolharzes wird durch Einsatz geeigneter Katalysatoren die Reaktion der sekundären Hydroxygruppen des bereits entstandenen Epoxidharzes mit Epoxidgruppen begünstigt.

Geeignete Phenolharze sind beispielsweise Novolake, phenolische Resole, allgemein Kondensationsprodukte von Aldehyden (bevorzugt Formaldehyd und Acetaldehyd) mit Phenolen. Bevorzugte Phenole sind Phenol, Cresol, Xylenole, p-Phenylphenol, p-tert.butyl-Phenol, p-tert.amyl-Phenol, Cyclopentylphenol, p-Nonyl- und p-Octylphenol.

Die erfindungsgemäße härtbare Epoxidharz-Zusammensetzung kann auch einen Beschleuniger für die Härtung umfassen. Geeignete Härtungsbeschleuniger sind beispielsweise Imidazol oder Imidazol-Derivate oder Harnstoffderivate (Urone), wie beispielsweise 1,1-Dimethyl-3-phenylharnstoff (Fenuron). Auch die Verwendung von tertiären Aminen wie beispielsweise Triethanolamin, Benzyldimethylamin, 2,4,6-Tris(dimethylaminomethyl)phenol und Tetramethylguanidin als Härtungsbeschleuniger ist beschrieben (US 4,948,700). Bekanntermaßen kann beispielsweise die Härtung von Epoxidharzen mit DICY durch Zugabe von Fenuron beschleunigt werden.

Die erfindungsgemäße härtbare Epoxidharz-Zusammensetzung kann auch ein Verdünnungsmittel beinhalten.

Verdünnungsmitteln im Sinne dieser Erfindung sind konventionelle Verdünnungsmittel oder Reaktivverdünner. Durch die Zugabe von Verdünnungsmittel zu einer härtbaren Epoxidharz-Zusammensetzung wird üblicherweise deren Viskosität gesenkt.

Konventionelle Verdünnungsmittel sind typischerweise organische Lösungsmittel oder Mischungen davon, beispielsweise Ketone wie Aceton, Methylethylketon, Methylisobutylketon (MIBK), Diethylketon oder Cyclohexanon, Ester aliphatischer Carbonsäuren wie Ethylacetat, Propylacetat, Methoxypropylacetat oder Butylacetat, Glykole wie Ethylenglykol, Diethylenglykol, Triethylenglykol oder Propylenglykol etc., Glykolderivate wie Ethoxyethanol, Ethoxyethanolacetat, Ethylen- oder Propylenglycolmono- oder dimethylether, aromatische Kohlenwasserstoffe wie Toluol oder Xylole, aliphatische Kohlenwasserstoffe wie beispielsweise Heptan, sowie Alkanole wie Methanol, Ethanol, n- oder Isopropanol oder Butanole. Während des Aushärtens des Epoxidharzes verdampfen sie aus der Harzmasse. Dies kann zu einer unerwünschten Volumenreduktion des Harzes (Schrumpfung) oder zur Porenbildung führen, und so mechanische Eigenschaften des ausgehärteten Materials wie beispielsweise die Bruchfestigkeit aber auch die Oberflächeneigenschaften nachteilig beeinflussen.

Reaktivverdünner sind niedermolekulare Substanzen, die im Unterscheid zu konventionellen Lösungsmitteln funktionelle Gruppen, in der Regel Oxirangruppen, aufweisen, welche mit den Hydroxygruppen des Harzes und/oder den funktionellen Gruppen des Härters unter Ausbildung kovalenter Bindungen reagieren können. Reaktivverdünner im Sinne der vorliegenden Erfindung sind aliphatische oder cycloaliphatische Verbindungen. Sie verdampfen während des Aushärtens nicht, sondern werden während des Aushärtens kovalent in die sich bildende Harzmatrix eingebunden. Geeignete Reaktivverdünner sind beispielsweise mono- oder polyfunktionelle Oxirane. Beispiele für monofunktionelle Reaktivverdünner sind Glycidylether aliphatischer und cycloaliphatischer Monohydroxyverbindungen mit in der Regel 2 bis 20 C-Atomen wie z. B. Ethylhexylglycidylether sowie Glycidylester aliphatischer oder cycloaliphatischer Monocarbonsäuren mit in der Regel 2 bis 20 C-Atomen. Beispiele für polyfunktionelle Reaktivverdünner sind insbesondere Glycidylether polyfunktioneller Alkohole mit in der Regel 2 bis 20 C-Atomen, die im Mittel typischerweise 1,5 bis 4 Glycidylgruppen aufweisen, wie 1,4-Butandioldiglycidylether, 1,6-Hexandioldiglycidylether, Diethylenglykoldiglycidylether oder die Glycidylether des Trimethylolpropans oder Pentaerythritols. Bisher beschriebene Reaktivverdünner verbessern zwar die Viskositätseigenschaften der Epoxidharzzusammensetzungen, vielfach verschlechtern sie aber die Härte des ausgehärteten Harzes und führen zu einer geringeren Lösungsmittelbeständigkeit. Des Weiteren ist bekannt, dass die Reaktivverdünner die Reaktivität der damit formulierten Epoxidharz-Zusammensetzungen verringern, was längere Härtungszeiten zur Folge hat.

Die erfindungsgemäße härtbare Epoxidharz-Zusammensetzung kann auch Füllstoffe, beispielsweise Pigmente, beinhalten. Geeignete Füllstoffe sind Metalloxide wie Titandioxid, Zinkoxid und Eisenoxid oder Hydroxide, Sulfate, Carbonate, Silicate dieser oder anderer Metalle, beispielsweise Calciumcarbonat, Aluminiumoxid, Aluminiumsilicate. Weitere geeignete Füllstoffe sind beispielsweise Siliziumdioxid, pyrogene oder Fällungskieselsäure sowie Ruß, Talk, Baryt oder andere nichttoxische Pigmente. Auch Mischungen der Füllstoffe können eingesetzt werden. Den Gewichtsanteil der Füllstoffe an der Beschichtung, ihre Partikelgröße, -härte sowie ihren Formfaktor (aspect ratio) wird ein Fachmann je nach den Anwendungserfordernissen wählen.

Die erfindungsgemäße härtbare Epoxidharz-Zusammensetzung kann weitere Additive je nach den Erfordernissen enthalten, beispielsweise Entschäumer, Dispergiermittel, Netzmittel, Emulgatoren, Verdicker, Biocide, Co-Solventien, Basen, Korrosionsinhibitoren, Flammschutzmittel, Trennmittel und/oder Wachse.

Die erfindungsgemäße härtbare Epoxidharz-Zusammensetzung kann auch Verstärkungsfasern wie Glasfasern oder Carbonfasern enthalten. Diese können beispielsweise als kurze Faserstücke von wenigen mm bis cm Länge, sowie als Endlosfasern, Wickel oder Gewebe vorliegen.

Die vorliegende Erfindung betrifft weiter ein Verfahren zur Herstellung eines gehärteten Epoxidharzes, umfassend die Härtung der härtbaren Epoxidharz-Zusammensetzung.

Die Härtung kann bei Normaldruck und bei Temperaturen kleiner 250°C, insbesondere bei Temperaturen kleiner 235°C, vorzugsweise bei Temperaturen kleiner 220°C erfolgen, insbesondere in einem Temperaturbereich von 40°C bis 220°C.

Die Härtung der härtbaren Epoxidharz-Zusammensetzung zu Formkörpern erfolgt üblicherweise in einem Werkzeug, bis Formstabilität erreicht ist und das Werkstück aus dem Werkzeug entnommen werden kann. Der sich anschließende Prozess zum Abbau von Eigenspannungen des Werkstücks und/oder zum Vervollständigen der Vernetzung des gehärteten Epoxidharzes wird Tempern genannt. Grundsätzlich ist es auch möglich, den Temperprozess auch vor Entnahme des Werkstückes aus dem Werkzeug durchzuführen, etwa zur Vervollständigung der Vernetzung. Der Temperprozess findet üblicherweise bei Temperaturen an der Grenze der Formsteifigkeit statt (Menges et. al., "Werkstoffkunde Kunststoffe" (2002), Hanser-Verlag, 5. Auflage, S. 136). Üblicherweise wird bei Temperaturen von 120°C bis 220°C, bevorzugt bei Temperaturen von 150°C bis 220°C getempert. Üblicherweise wird das gehärtete Werkstück für einen Zeitraum von 30 bis 240 min den Temperbedingungen ausgesetzt. Abhängig von den Abmessungen des Werkstücks, können auch längerer Temperzeiten angebracht sein.

Bei der Härtung der härtbaren Epoxidharz-Zusammensetzung zu Beschichtungen wird zunächst das zu beschichtende Substrat mit der härtbaren Epoxidharz-Zusammensetzung beaufschlagt und anschließend die härtbaren Epoxidharz-Zusammensetzung auf dem Substrat gehärtet.

Das Beaufschlagen der härtbaren Epoxidharz-Zusammensetzung kann vor oder nach dem Formen des gewünschten Artikels durch Tauchen, Spritzen, Aufwalzen, Aufstreichen, Aufrakeln oder dergleichen bei flüssigen Formulierungen oder durch Aufbringen eines Pulverlacks erfolgen. Das Aufbringen kann auf Einzelstücke (z.B. Dosenteile) oder auf prinzipiell endlose Substrate, beispielsweise auf Bandrollen aus Stahl beim Coil Coating, erfolgen. Geeignete Substrate sind üblicherweise aus Stahl, Weißblech (verzinnter Stahl) oder Aluminium (z.B. für Getränkedosen). Das Aushärten der härtbaren Epoxidharz-Zusammensetzung nach Aufbringen auf dem Substrat findet üblicherweise im Temperaturbereich von 20°C bis 250°C, bevorzugt von 50°C bis 220°C, besonders bevorzugt von 100°C bis 220°C statt. Die Zeit beträgt üblicherweise 0,1 bis 60 min, bevorzugt 0,5 bis 20 min, besonders bevorzugt 1 bis 10 min.

Eine ausführliche Beschreibung der gängigen Typen von Metallverpackungen und ihrer Herstellung, verwendete Metalle und Legierungen und Beschichtungsmethoden wird in P.K.T. Oldring und U. Nehring: Packaging Materials, 7. Metal Packaging for Foodstuffs, ILSI Report, 2007, gegeben, worauf hiermit Bezug genommen wird.

Die vorliegende Erfindung betrifft weiter die durch Härtung der erfindungsgemäßen härtbaren Epoxidharz-Zusammensetzung erhältlichen bzw. erhaltenen gehärteten Epoxidharze, insbesondere in Form von Beschichtungen auf metallischen Substraten.

Die vorliegende Erfindung betrifft weiter die Verwendung der erfindungsgemäßen Verbindungen der Formel I bzw. der erfindungsgemäßen härtbaren Epoxidharz-Zusammensetzung zur Herstellung von Klebstoffen, Verbundwerkstoffen, Formkörpern und Beschichtungen, insbesondere von Beschichtungen vorzugsweise von Behältern insbesondere von Behältern für die Lagerung von Lebensmitteln.

Die vorliegende Erfindung betrifft weiter die Verwendung der erfindungsgemäßen Verbindungen der Formel I als Reaktivverdünner, insbesondere als Reaktivverdünner für BADGE- oder BFDGE-basierte Epoxidharze. Die erfindungsgemäßen Verbindungen der Formel I sind geeignet die Viskosität von anderen Epoxidharzen, insbesondere BADGE- oder BFDGE-basierten Epoxidharzen in der Harzkomponente und in der härtbaren Zusammensetzung herabzusetzen. Vorteilhafterweise führt der Zusatz der erfindungsgemäßen Verbindungen der Formel I als Reaktivverdünner zu einer vergleichsweise geringen Reduzierung der Glasübergangstemperatur. Die Glasübergangstemperatur (Tg) kann mittels Dynamisch-Mechanischer Analyse (DMA), beispielsweise gemäß der Norm DIN EN ISO 6721, oder mit einem Differential Kalorimeter (DSC), beispielsweise gemäß der Norm DIN 53765, bestimmt werden. Bei der DMA wird ein rechteckiger Probekörper mit einer erzwungenen Frequenz und vorgegebener Deformation auf Torsion belastet. Dabei wird die Temperatur mit einer definierten Rampe gesteigert und Speicher- und Verlustmodul in festen Zeitintervallen aufgezeichnet. Ersterer stellt die Steifigkeit eines viskoelastischen Werkstoffs dar. Letzterer ist proportional zur im Material dissipierten Arbeit. Die Phasenverschiebung zwischen der dynamischen Spannung und der dynamischen Verformung wird durch den Phasenwinkel δ gekennzeichnet. Die Glasübergangstemperatur kann durch unterschiedliche Methoden bestimmt werden: Als Maximum der tan δ Kurve, als Maximum des Verlustmoduls oder mittels Tangentenmethode am Speichermodul. Bei Bestimmung der Glasübergangstemperatur unter Verwendung eines Differential Kalorimeters wird eine sehr kleine Probenmenge (ca. 10 mg) in einem Aluminiumtiegel erwärmt und der Wärmestrom zu einem Referenztiegel gemessen. Dieser Zyklus wird dreimal wiederholt. Die Bestimmung des Glasübergangs erfolgt als Mittelwert aus der zweiten und dritten Messung. Die Auswertung der Tg-Stufe der Wärmestromkurve kann über den Wendepunkt, nach der halben Breite oder dem Verfahren der Mittelpunktstemperatur bestimmt werden.

Unter dem Begriff Topfzeit ist eine Kenngröße zu verstehen, die üblicherweise benutzt wird, um die Reaktivität verschiedener Harz/Härter- und/oder Harz/Härtermischungs-Kombinationen zu vergleichen. Die Messung der Topfzeit ist eine Methode zur Charakterisierung der Reaktivität von Laminiersystemen mittels einer Temperaturmessung. Je nach Anwendung haben sich Abweichungen von den dort beschriebenen Parametern (Menge, Prüfbedingungen und Messmethode) etabliert. Dabei wird die Topfzeit wie folgt bestimmt: 100 g der härtbaren Zusammensetzung, enthalten Epoxidharz und Härter bzw. Härtergemisch werden in einem Behälter (üblicherweise ein Pappbecher) gefüllt. In diese härtbare Zusammensetzung wird ein Temperaturfühler eingetaucht, der in bestimmten Zeitabständen die Temperatur misst und abspeichert. Sobald diese härtbare Zusammensetzung erstarrt ist, wird die Messung beendet und die Zeit bis zum Erreichen der Maximaltemperatur ermittelt. Für den Fall, dass die Reaktivität einer härtbaren Zusammensetzung zu gering ist, wird diese Messung bei erhöhter Temperatur durchgeführt. Bei der Angabe der Topfzeit muss auch immer die Prüftemperatur angegeben werden.

Die Gelzeit (auch Gelierzeit) gibt nach DIN 16 945 einen Anhaltspunkt über die Zeitspanne zwischen der Zugabe des Härters zum Reaktionsgemisch und des Übergangs der Reaktionsharzmasse vom flüssigen in den Gelzustand. Die Temperatur spielt dabei eine wichtige Rolle, weshalb die Gelzeit jeweils für eine vorbestimmte Temperatur ermittelt wird. Mit Hilfe dynamisch-mechanischer Methoden, insbesondere der Rotationsviskosimetrie, können auch kleine Probenmengen quasi-isotherm untersucht und ihr gesamter Viskositäts- bzw. Steifigkeitsverlauf erfasst werden. Nach der Norm ASTM D 4473 ist der Schnittpunkt zwischen dem Speichermodul G' und dem Verlustmodul G", an dem die Dämpfung tan-δ den Wert 1 hat, der Gelpunkt, und die Zeitspanne ab Zugabe des Härters zum Reaktionsgemisch bis zum Erreichen des Gelpunkts ist die Gelzeit. Die so bestimmte Gelzeit kann als Maß für die Aushärtungsgeschwindigkeit angesehen werden.

Die Shore-Härte ist eine Kennzahl für Polymere wie bspw. gehärtete Epoxidharze, die in direkter Beziehung zur Eindringtiefe eines Eindringkörper (Indenter) in den Prüfkörper steht, und ist somit ein Maß für die Härte des Prüfkörpers. Sie wird bspw. entsprechend der Norm DIN ISO 7619-1 bestimmt. Man unterscheidet zwischen den Verfahren Shore A, C und D. Als Indenter wird ein federbelasteter Stift aus gehärtetem Stahl verwendet. Dabei wird der Indenter mit Federkraft in den Prüfkörper gedrückt und die Eindringtiefe stellt ein Maß für die Shore-Härte dar. Während für die Bestimmung der Shore-Härte A und C wird als Indenter ein Kegelstumpf mit einer Stirnfläche von 0,79 mm im Durchmesser und einem Öffnungswinkel von 35° verwendet wird, benutzt man bei der Shore-Härte D-Prüfung als Indenter ein Kegelstumpf mit einer kugelförmigen Spitze mit einem Radius von 0,1 mm und einem Öffnungswinkel von 30°. Für die Ermittlung der Shore-Härtekennwerte wurde eine Skala eingeführt, die von 0 Shore (2,5 mm Eindringtiefe) bis 100 Shore (0 mm Eindringtiefe) reicht. Dabei entspricht der Skalenwert 0 dem maximal möglichen Eindruck, d.h. der Werkstoff setzt dem Eindringen des Indenters keinen Widerstand entgegen. Dagegen entspricht der Skalenwert 100 einem sehr hohen Widerstand des Werkstoffs gegenüber dem Eindringen und es wird praktisch kein Eindruck erzeugt.
Bei der Bestimmung der Shore-Härte spielt die Temperatur eine entscheidende Rolle, so dass die Messungen in einem eingeschränkten Temperaturintervall von 23°C ± 2°C normgerecht durchgeführt werden müssen.

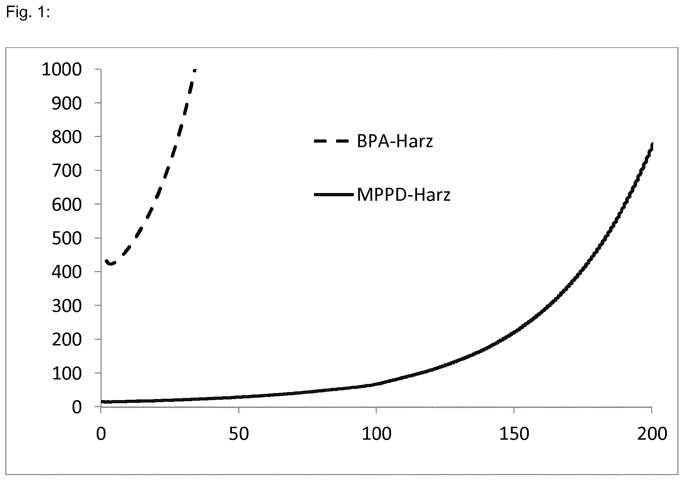

Fig. 1 zeigt den Viskositätsverlauf eines MPPD-DGE-Epoxidharzes und eines BADGE-Epoxidharzes für die Härtung mit IPDA bei 40°C (Viskosität (y-Achse) in mPas gegen die Zeit (x-Achse) in min).

Die Erfindung wird nun durch die nachfolgenden, nichtlimitierenden Beispiele näher erläutert.

### Beispiel 1

### Herstellung von monomerem MPPD-DGE

2-Methyl-2-phenyl-1,3-propandiol (MPPD; 0,05 mol, 8,31 g) wird in Epichlorhydrin (0,4 mol, 37,01 g) gelöst und 30 min bei RT gerührt. Anschließend wird vorsichtig portionsweise gepulvertes KOH (0,3 mol, 16,83 g) zugegeben und bis zum vollständigen Umsatz bei RT gerührt. Anschließend werden 100 ml Wasser zugegeben und 30 min bei RT gerührt. Die Reaktionsmischung wird mehrfach mit Methyl-tert-butylether (MTBE) extrahiert. Die vereinigten organischen Phasen werden über MgSO₄ getrocknet, filtriert und eingeengt.

Das so erhaltene Epoxidharz weist ein Epoxid-Äquivalenzgewicht (EEW) von 150-170 g/eq auf und besteht zu ca. 70 Gew.-% aus monomerem MPPD-DGE (semiquantitativ bestimmt durch GPC-MALDI-MS).

Bei den restlichen 30 Gew.-% handelt es sich um oligomeren MPPD-DGE, der zu ca. 50 Gew.-% aus einem Dimer besteht, dessen sekundäre Hydroxygruppe ebenfalls glycidyliert ist (insgesamt eine trifunktionelle Verbindung bezogen auf die Epoxidgruppen). Der Rest besteht aus dem nicht an der sekundären Hydroxygruppe glycidylierten Dimer und höhermolekularen MPPD-DGE Oligomeren.

Der monomere MPPD-DGE kann chromatographisch von den Oligomeren gereinigt werden.

### Beispiel 1a

### Alternative Herstellung von monomerem MPPD-DGE

6 mol MPPD werden bei 90°C mit 38 mmol Zinn(IV)chlorid versetzt. 12 mol Epichlorhydrin werden über 3 h in kleinen Portionen zugegeben, wobei die Temperatur nicht unter 90°C fallen oder über 120°C ansteigen soll. Nach Abkühlen auf Raumtemperatur wird 25 %ige Natronlauge (11 mmol) zugegeben und 2 h zum Rückfluss erhitzt. Anschließend werden die Phasen getrennt und das Produkt mehrfach mit Wasser gewaschen. Man erhält das Produkt in quantitativer Ausbeute.

Das so erhaltene Epoxidharz weist ein Epoxid-Äquivalentgewicht (EEW) von 150 bis 210 g/eq auf und besteht zu 60 bis 90 Gew.-% aus monomerem MPPD-DGE (bestimmt durch NMR). Bei den restlichen 10 bis 40 % handelt es sich um dimeren und oligomeren MPPD-DGE, der teilweise organisch gebundenes Chlor enthalten kann.

Anstelle von Zinn(IV)chlorid können auch andere Lewis-Säuren und anstelle von Natronlauge auch andere Basen eingesetzt werden.

Der monomere MPPD-DGE kann destillativ oder chromatographisch von den Oligomeren gereinigt werden.

### Beispiel 2

### Herstellung von oligomerem MPPD-DGE

19,5 g MPPD werden mit 40 g des Reaktionsprodukts von Beispiel 1 (70 Gew.-% monomerer MPPD-DGE) in 60 g Methoxypropylacetat gelöst und unter sukzessive Zugabe von 2,5 g Katalysator (Anchor 10-40, von der Firma Air Products) für etwa 3 d bei 140°C erhitzt bis der gewünschte EEW erreicht ist.

### Beispiel 2a

### Alternative Herstellung von oligomerem MPPD-DGE

19,5 g MPPD werden mit 40 g des Reaktionsproduktes von Beispiel 1a in 60 g Methoxypropylacetat gelöst und bei 140°C tropfenweise mit einer 5-50 %igen Lösung von 2,5 g Katalysator (Anchor 1040, von der Firma Air Products) in Methoxypropylacetat versetzt. Nach beendeter Zugabe wird die Reaktionslösung so lange gerührt bis der der gewünschte EEW erreicht ist.

### Beispiel 3

### Herstellung von gehärtetem Epoxidharz aus monomerem MPPD-DGE

MPPD-DGE aus Beispiel 1 (70 Gew.-% monomeres MPPD-DGE, EEW 155 g/eq) wurde unmittelbar nach der Herstellung und ohne weitere Aufreinigung mit einer stöchiometrischen Menge eines aminischen Härters gemischt. Als Härter wurden eingesetzt IPDA, TETA oder Polyetheramin D230. Zum Vergleich wurden entsprechende stöchiometrische Mischungen aus Bisphenol-A basiertem Epoxidharz (BADGE; Epilox A19-03 der Firma LEUNA Harze, EEW
182 g/eq) und den aminischen Härten hergestellt. Die Mischungen wurden bei 23°C, 40°C oder 75°C inkubiert.

Die rheologischen Messungen zur Untersuchung des Reaktivitätsprofils wurden an einem schubspannungsgesteuerten Platte-Platte Rheometer (MCR 301 der Firma Anton Paar) mit einem Plattendurchmesser von 15 mm und einem Spaltabstand von 0,25 mm bei den unterschiedlichen Temperaturen durchgeführt.

Die Messung der Gelzeit wurde rotierend-oszillierend an dem oben genannten Rheometer bei 23°C und 75°C durchgeführt. Der Schnittpunkt von Verlustmodul (G") und Speichermodul (G') liefert die Gelzeit. Die mittlere Startviskosität während 2 bis 5 min nach Herstellen der Mischung wurde bei 23°C, 40°C bzw. 75°C gemessen. Die Ergebnisse der Messungen sind in den Tabellen 1 bis 5 zusammengestellt.

Für die Härtung mit stöchiometrischer Menge von IPDA bei 40°C ist der Viskositätsverlauf in Fig. 1 dargestellt.

Die Messung der Glasübergangstemperatur (Tg) erfolgte mittels DSC-Untersuchung (Differential Scanning Calorimetry) der Härtungsreaktion nach ASTM D 3418 beim 2ten Durchlauf. Für die Messung wurde das folgende Temperaturprofil gefahren: 0°C → 5 K/min 180°C → 30 min 180°C → 20 K/min 0°C → 20 K/min 220°C. Die Ergebnisse dieser Tg-Messungen sind in den Tabellen 6 und 7 zusammengestellt.

**Tabelle 1: Gelzeiten (in min) bei 23°C**

| | IPDA | TETA |
|---|---|---|
| BADGE (EEW 182 g/eq) | 451 | 325 |
| MPPD-DGE (EEW 155 g/eq) | 2019 | 551 |

**Tabelle 2: Startviskosität (in mPas) bei 23°C**

| | IPDA | TETA |
|---|---|---|
| BADGE (EEW 182 g/eq) | 2629 | 2900 |
| MPPD-DGE (EEW 155 g/eq) | 14 | 13 |

**Tabelle 3: Gelzeiten (in min) bei 75°C**

| | IPDA | TETA | D230 |
|---|---|---|---|
| BADGE (EEW 182 g/eq) | 39 | 18 | 60 |
| MPPD-DGE (EEW 155 g/eq) | 61 | 12 | 99 |

**Tabelle 4: Startviskosität (in mPas) bei 75°C**

| | IPDA | TETA | D230 |
|---|---|---|---|
| BADGE (EEW 182 g/eq) | 93 | 106 | 39 |
| MPPD-DGE (EEW 155 g/eq) | 17 | 17 | 13 |

**Tabelle 5: Startviskosität (in mPas) bei 40°C**

| | IPDA |
|---|---|
| BADGE (EEW 182 g/eq) | 426 |
| MPPD-DGE (EEW 155 g/eq) | 15 |

**Tabelle 6: Glasübergangstemperatur (in °C) für die Zusammensetzung im 2ten Durchlauf der DSC-Untersuchung ohne vorherige Aushärtung**

| Verwendetes Harz | IPDA | TETA | D230 |
|---|---|---|---|
| BPA-basiert (EEW 182 g/eq) | 159 | 143 | 93 |
| MPPD-basiert (EEW 155 g/eq) | 73 | 59 | 30 |

**Tabelle 7: Glasübergangstemperatur (in °C) für die Zusammensetzung im 2ten Durchlauf der DSC-Untersuchung nach Aushärtung (mit 1 K/min auf 180°C und anschließend 30 min bei 180°C)**

| Verwendetes Harz | IPDA | TETA | D230 |
|---|---|---|---|
| BPA-basiert (EEW 182 g/eq) | 169 | 137 | 96 |
| MPPD-basiert (EEW 155 g/eq) | 86 | 56 | 39 |

Die Messungen zeigen, dass mit dem MPPD-DGE basierten Harz eine deutlich niedrigere Glasübergangstemperatur erzielt wird, was auf eine erhöhte Flexibilität hinweist. Des Weiteren ist eine deutlich erniedrigte Startviskosität sowie eine verminderte Reaktivität bei der Härtung mit üblichen Aminohärtern festzustellen.

### Beispiel 4

### Herstellung von Beschichtungen aus gehärtetem Epoxidharz basierend auf oligomerem MPPD-DGE

Oligomeres MPPD-DGE aus Beispiel 2 wurden ohne weitere Aufarbeitung als Epoxidharz zur Herstellung von Beschichtungen aus gehärtetem Epoxidharz auf verzinntem Stahlblech eingesetzt. Zum Vergleich wurde aus Bisphenol-A basiertes Epoxidharz (Beckopox EP 307, EEW: 1400 bis 1900 g/eq; von der Firma Cytec Industries Inc.) eingesetzt. Dazu wurden zunächst 50 %tige Lösungen der Epoxidharze in Methoxypropylacetat (MPA) hergestellt. Anschließend wurden die Epoxidharzlösungen mit einem Phenolharz (Phenodur PR 516/60B von der Firma Cytec Industries Inc.) als Härter und einem Phosphorsäure-basierten Katalysator (Cycat XK 406 N von der Firma Cytec Industries Inc.) sowie weiterem MPA vermischt. Die Mengenverhältnisse der Mischungen (Angaben in Gew.-% bezogen auf die gesamte Mischung) sind in Tabelle 8 zusammengestellt. Dann wurden die Mischungen mittels Rakelaufziehgerät (Graf, MTV Messtechnik OHG, 20 µm Spiralrakel, 80 mm/s Aufziehgeschwindigkeit) auf die zuvor entfetteten Substrate (E 2,8/2,8, ein beidseitig mit je 2,8 g Zinn pro m² beschichtetes Weißblech, das gängiger Weise für die Herstellung von Dosen für Lebensmittel verwendet wird) aufgerakelt.

Die Beschichtungen (Lacke) wurden bei 200°C für 12 min eingebrannt. Es wurde eine Trockenfilmdicke von 5 bis 6 µm eingestellt. Nach dem Einbrennen auf dem verzinnten Stahlblech resultierte eine gold-gelbe Färbung des Lackes, wie er für Doseninnenbeschichtungen üblich ist (Goldlack).

**Tabelle 8: Zusammensetzungen der Epoxidharzmischungen für Beschichtungsversuche**

| Komponente | Vergleich | Ansatz 1 | Ansatz 2 | Funktion |
|---|---|---|---|---|
| Beckopox EP 307, 50 %ig in MPA | 51,23 | | | Bisphenol-A basiertes Epoxidharz |
| Oligomeres MPPD-DGE gemäß Beispiel 2, 50 %ig in MPA | | 57,95 | 55,0 | Epoxidharz |
| Phenodur PR 516/60B | 18,28 | 11,57 | 14,60 | Härter (Phenolharz) |
| Cycat XK 406 N | 1,1 | 1,1 | 2,1 | Phosphorsäure basierter Katalysator |
| MPA | 29,39 | 29,38 | 28,30 | Lösemittel |

### Beispiel 5

### Prüfung von Beschichtungen aus gehärtetem Epoxidharz basierend auf oligomerem MPPD-DGE

Die Haftung der Lacke aus Beispiel 4 auf dem nicht vorbehandelten verzinnten Stahlblech wurde mittels einer Gitterschnittprüfung nach DIN EN ISO 2409 durchgeführt. Die Gitterschnitte der relativ dünnen und transparenten Beschichtungen waren mit dem unbewaffneten Auge kaum zu beurteilen, so dass Mikroskop-Aufnahmen bei 10-facher Vergrößerung angefertigt wurden. Bei allen Beschichtungen wurde die Bestnote GT 0 erreicht.

Die Flexibilität der Lacke aus Beispiel 4 wurde mittels Erichsen-Schlagprüfung nach DIN EN ISO 6272 und DIN EN 13523-5 (Schlagprüfgerät Modell 304) geprüft. Es wurden Prüfungen mit Kugelfallhöhen von 20, 50, 70 und 100 cm durchgeführt. Keine der Beschichtungen zeigte Risse (bei allen Fallhöhen). Das Substrat wurde dabei zerbeult.

Zur Prüfung der Beständigkeit gegenüber sauren Medien wurde ein Praxistest mit handelsüblicher zitronensäurehaltigen Limonade durchgeführt. Dazu wurden die ausgehärteten Beschichtungen aus Beispiel 4 mit einem konstanten Volumen der zitronensäurehaltigen Limonade benetzt und die Benetzungsfläche mit einem Uhrglas abgedeckt. Nach 5 und nach 24 h Einwirkzeit wurden die benetzten Flächen begutachtet. Es zeigte sich in keinem Fall eine Beschädigung (Ränder, Blasenbildung, Verfärbung oder Ablösung) der Beschichtung.

### Beispiel 6

### Einsatz von monomerem MPPD-DGE als Reaktivverdünner

Bisphenol-A basiertes Epoxidharz (BADGE; Epilox A19-03 der Firma LEUNA Harze, EEW 182 g/eq) wurde mit 10 Gew.-% des MPPD-DGE aus Beispiel 1a (zu ca. 70 +/- 10 Gew.-% monomeres MPPD-DGE (bestimmt durch NMR), EEW 187 g/eq, unmittelbar nach der Herstellung und ohne weitere Aufreinigung) als Reaktivverdünner vermischt. Diese Harzmischung wurde mit einer stöchiometrischen Menge des aminischen Härters MXDA (m-Xylendiamin, Sigma-Aldrich)) versetzt.

Zum Vergleich wurden entsprechende Harzmischungen ohne Reaktivverdünner bzw. mit 10 Gew.-% Hexandiol-diglycidylether (HDDGE) (Epilox P13-20 LEUNA Harze) oder C12-C14-Mono-glycidylether (C12-C14-MGE) (Epilox P13-18, LEUNA Harze) als Reaktivverdünner hergestellt und ebenfalls mit der entsprechenden stöchiometrische Menge des aminischen Härters MXDA versetzt. Die Mischungen wurden bei 10°C, 23°C oder 75°C inkubiert.

Die rheologischen Messungen wurden entsprechend Beispiel 3 durchgeführt.

Die Messung der Gelzeit wurde entsprechend Beispiel 3 bei 10°C, 23°C und 75°C durchgeführt. Die mittlere Startviskosität während 2 bis 5 min nach Herstellen der Mischung wurde bei 23°C gemessen. Die Ergebnisse der Messungen sind in den Tabellen 9 und 10 zusammengestellt

**Tabelle 9: Gelzeiten (in min) bei 10°C, 23°C, bzw. 75°C**

| | | | |
|---|---|---|---|
| | 10°C | 23°C | 75°C |
| BADGE | 1011 | 383 | 19,5 |
| BADGE + HDDGE | 1165 | 462 | 18,0 |
| BADGE + C12-C14-MGE | 1446 | 565 | 21,0 |
| BADGE + MPPD-DGE | 471 | 416 | 17,5 |

**Tabelle 10: Startviskosität (in mPas) bei 23°C**

| | |
|---|---|
| BADGE | 12000 |
| BADGE + HDDGE | 3253 |
| BADGE + C12-C14-MGE | 2123 |
| BADGE + MPPD-DGE | 7600 |

Zur Bestimmung der Topfzeit werden 100 g der jeweiligen Reaktionsharzmasse aus Harzmischung und wurde in einem Papierbecher angerührt, mit einem Temperaturfühler versehen und bei 23°C gelagert. Die Temperatur der Probe wird als Funktion der Zeit aufgenommen. Die Zeit in der die Probe die Maximaltemperatur erreicht hat ist die Topfzeit. Zusätzlich wird die Zeit bis zum Erreichen von 50°C bestimmt. Die Ergebnisse der Messungen sind in Tabelle 11 zusammengestellt.

**Tabelle 11: Topfzeit (tₒ) bei 23°C, sowie maximale Temperatur (Tₘₐₓ) und Zeitdauer bis zum Erreichen von 50°C (t₅₀)**

| | tₒ (in min) | Tₘₐₓ (in °C) | t₅₀ (in min) |
|---|---|---|---|
| BADGE | 118 | 243 | 108 |
| BADGE + HDDGE | 104 | 234 | 93 |
| BADGE + MPPD-DGE | 102 | 238 | 93 |

Die Messung der Glasübergangstemperatur erfolgt wie in Beispiel 3 beschrieben. Die Ergebnisse der Messungen sind in Tabelle 12 zusammengestellt.

**Tabelle 12: Glasübergangstemperatur (in °C)**

| | |
|---|---|
| BADGE | 126,6 |
| BADGE + HDDGE | 96,7 |
| BADGE + C12-C14-MGE | 100,9 |
| BADGE + MPPD-DGE | 115,6 |

Zur Untersuchung der mechanischen Eigenschaften der entsprechenden Duroplaste werden die jeweiligen Reaktionsharzmassen aus Harzmischung und Härter im Speedmixer gemischt (1 min bei 2000 rpm), durch Anlegen von Vakuum (1 mbar) bei 23°C entgast und anschließend zu Formteilen gehärtet (2 h 80°C, 3 h 125°C). Die mechanischen Tests werden nach ISO 527-2:1993 und ISO 178:2006 durchgeführt. Zusätzlich wird die Shore-D-Härte der so gehärteten Duroplaste an den entsprechenden Formteilen (Dicke 3 mm) bei 23°C mittels Durometer (TI Shore Prüfstand, Sauter Messtechnik) bestimmt. Die Ergebnisse der Messungen sind in Tabelle 13 zusammengestellt.

**Tabelle 13: Mechanische Daten für die gehärteten Reaktionsharzmassen**

| | BADGE | BADGE + HDDGE | BADGE + C12-C14-MGE | BADGE + MPPD-DGE |
|---|---|---|---|---|
| Zugfestigkeit (in Mpa) (*Tensile strength*) | 71,2 | 77,1 | 68,1 | 72,2 |
| Zugdehnung (in %) (*Tensile elongation*) | 5,55 | 3,58 | 5,31 | 6,42 |
| Elastizitätsmodul E (in MPa) (*Tensile modulus*) | 2894 | 3549 | 3033 | 3074 |
| Biegefestigkeit (in MPa) (*Flexural Strength*) | 110 | 135 | 111 | 113 |
| Biegeverlängerung (in %) (*Flexural elongation*) | 6,1 | 5,42 | 6,09 | 6,1 |
| Biegemodul (in MPa) (*Flexural modulus*) | 3030 | 3618 | 3104 | 3151 |
| Shore-D Härte | 91 | 86 | 88 | 90 |

Die mit der Zugabe von Reaktivverdünnern im Allgemeinen einhergehende Erniedrigung der Glasübergangstemperatur fällt im Fall des Einsatzes von MPPD-DGE als Reaktivverdünner vergleichsweise gering aus. Im Vergleich zu HDDGE, bei dessen Zugabe eine gewisse Versprödung (Erniedrigung der Zug und Biegedehnung) zu beobachten ist, werden die mechanischen Daten durch den Zusatz von MPPD-DGE im Vergleich zum Reinharz nur geringfügig verändert.

### Vergleichsbeispiel 1

### Herstellung von 2-Phenyl-1,2-propandioldiglycidylether (1,2-PD-DGE) und dessen Härtung

2-Phenyl-1,2-propandiol (1,2-PD) wird entsprechend Beispiel 1 mit Epichlorhydrin zum Diglycidylether (1,2-PD-DGE mit EEW von 192 g/eq) umgesetzt, und anschließend ohne weitere Aufreinigung mit IPDA im stöchiometrischen Ansatz gehärtet entsprechend Beispiel 3. Gelzeit und Startviskosität bei 23°C und 75°C sowie Glasübergangstemperatur wurden gemäß Beispiel 3 bestimmt. Die Ergebnisse der Messungen sind in Tabelle 14 zusammengestellt.

**Tabelle 14: Gelzeit und Startviskosität für die Härtung von 1,2-PD-DGE mit IPDA bei 23°C und 75°C, sowie Glasübergangstemperatur für die Zusammensetzung im 2ten Durchlauf der DSC-Untersuchung ohne vorherige Aushärtung**

| | |
|---|---|
| Gelzeit (in min) bei 23°C | 2928 |
| Gelzeit (in min) bei 75°C | 53 |
| Startviskosität (in mPas) bei 23°C | 240 |
| Startviskosität (in mPas) bei 75°C | 23 |
| Glasübergangstemperatur | 56 |

MPPD-DGE ist in guter Ausbeute herstellbar und kann auch ohne weitere Aufreinigung für die Härtung eingesetzt werden. Die Härtung von entsprechend hergestelltem 1,2-PD-DGE führt dagegen zu gehärteten Epoxidharz-Zusammensetzungen mit deutlich geringerer Glasübergangstemperatur.

## Patentansprüche

1. 2-Phenyl-1,3-propandiol-Diglycidylether-Derivat der Formel I 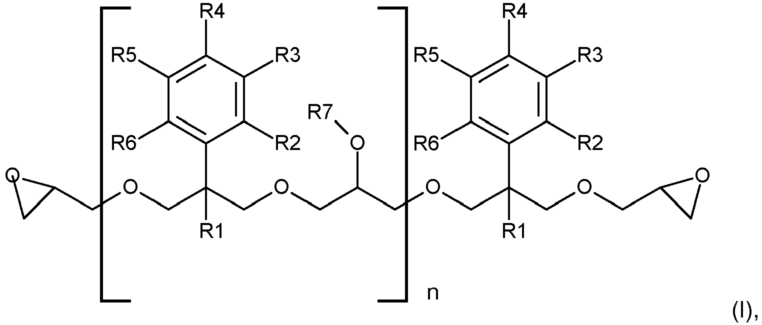 wobei
R1 eine Alkyl-Gruppe mit 1 bis 5 C-Atomen oder eine Aryl-Gruppe mit 6 bis 10 C-Atomen ist,
R2 bis R6 unabhängig voneinander ein Wasserstoff-Atom oder eine Alkyl-Gruppe mit 1 bis 4 C-Atomen ist,
R7 ein Wasserstoff-Atom oder eine Glycidyl-Gruppe ist, und
n = 0 bis 30 ist.

2. Das 2-Phenyl-1,3-propandiol-Diglycidylether-Derivat gemäß Anspruch 1, wobei R1 eine Alkyl-Gruppe mit 1 bis 4 C-Atomen ist und R2 bis R6 jeweils Wasserstoff-Atome sind.

3. Verfahren zur Herstellung von eines 2-Phenyl-1,3-propandiol-Diglycidylether-Derivats nach Anspruch 1 oder 2 umfassend die Umsetzung eines 2-Phenyl-1,3-propandiol-Derivats der Formel II 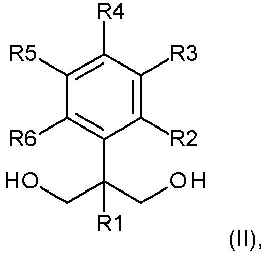 wobei R1 bis R6 die gleiche Bedeutung haben wie für das 2-Phenyl-1,3-propandiol-Diglycidylether-Derivat, mit Epichlorhydrin.

4. Verfahren zur Herstellung von eines 2-Phenyl-1,3-propandiol-Diglycidylether-Derivat-basierten Oligomers, wobei ein 2-Phenyl-1,3-propandiol-Diglycidylether-Derivat nach Anspruch 1 oder 2 mit n = 0 oder ein Gemisches von mehreren 2-Phenyl-1,3-propandiol-Diglycidylether-Derivaten nach Anspruch 1 oder 2 mit verschiedenen n, wobei überwiegend n = 0 ist, mit einem oder mehreren Diolen umgesetzt wird.

5. 2-Phenyl-1,3-propandiol-Diglycidylether-Derivat-basiertes Oligomer, das erhältlich ist, durch Umsetzung eines 2-Phenyl-1,3-propandiol-Diglycidylether-Derivats nach Anspruch 1 oder 2 mit n = 0 oder ein Gemisches von mehreren 2-Phenyl-1,3-propandiol-Diglycidylether-Derivaten nach Anspruch 1 oder 2 mit verschiedenen n, wobei überwiegend n = 0 ist, mit einem oder mehreren Diolen.

6. Das 2-Phenyl-1,3-propandiol-Diglycidylether-Derivat-basierte Oligomer gemäß Anspruch 5, wobei die ein oder mehreren Diole nicht identisch sind mit den den 2-Phenyl-1,3-propandiol-Diglycidylether-Derivaten entsprechenden 2-Phenyl-1,3-propandiol-Derivaten.

7. Härtbare Epoxidharz-Zusammensetzung, umfassend eine Härterkomponente, die mindestens einen Härter enthält, und eine Harzkomponente, die mindestens eine 2-Phenyl-1,3-propandiol-Diglycidylether-Derivat basierte Polyepoxidverbindung ausgewählt aus der Gruppe bestehend aus 2-Phenyl-1,3-propandiol-Diglycidylether-Derivaten nach Anspruch 1 oder 2 und 2-Phenyl-1,3-propandiol-Diglycidylether-Derivat-basierte Oligomere nach Anspruch 6 enthält.

8. Die härtbare Epoxidharz-Zusammensetzung gemäß Anspruch 7, die Harzkomponente mindestens eine 2-Phenyl-1,3-propandiol-Diglycidylether-Derivat basierte Polyepoxidverbindung ausgewählt aus der Gruppe bestehend aus 2-Phenyl-1,3-propandiol-Diglycidylether-Derivaten nach Anspruch 1 oder 2 enthält.

9. Die härtbare Epoxidharz-Zusammensetzung gemäß Anspruch 7 oder 8, wobei der mindestens eine Härter ausgewählt ist aus der Gruppe bestehend aus Aminohärter und Phenolharz.

10. Die härtbare Epoxidharz-Zusammensetzung gemäß einem der Ansprüche 7 bis 9, wobei die 2-Phenyl-1,3-propandiol-Diglycidylether-Derivat basierte Polyepoxidverbindungen insgesamt einen Anteil von mindestens 40 Gew.-% bezogen auf die gesamte Harzkomponente ausmachen.

11. Die härtbare Epoxidharz-Zusammensetzung gemäß einem der Ansprüche 7 bis 10, wobei die härtbare Epoxidharz-Zusammensetzung einen Anteil von weniger als 40 Gew.-% Bisphenol A oder F basierte Verbindungen bezogen auf die gesamte Harzkomponente aufweist.

12. Die härtbare Epoxidharz-Zusammensetzung gemäß Anspruch 8 oder 9, wobei die Harzkomponente mindestens ein Epoxidharz, ausgewählt aus der Gruppe bestehend aus Diglycidylether von Bisphenol A, Diglycidylether von Bisphenol F, Diglycidylether von kernhydriertem Bisphenol A, Diglycidylether von kernhydriertem Bisphenol F, Tetraglycidylmethylendianilin, Kresol-Epoxidharz, Novolak-Epoxidharz und Triglycidylaminophenole und deren Oligomere, enthält.

13. Die härtbare Epoxidharz-Zusammensetzung gemäß Anspruch 12, wobei die 2-Phenyl-1,3-propandiol-Diglycidylether-Derivat basierte Polyepoxidverbindungen insgesamt einen Anteil von bis 30 Gew.-% ausmacht.

14. Verfahren zur Herstellung eines gehärteten Epoxidharzes, umfassend die Härtung der härtbaren Epoxidharz-Zusammensetzung nach einem der Ansprüche 7 bis 13.

15. Gehärtetes Epoxidharz erhältlichen durch Härtung der härtbaren Epoxidharz-Zusammensetzung nach einem der Ansprüche 7 bis 13.

16. Harzkomponente, umfassend mindestens eine 2-Phenyl-1,3-propandiol-Diglycidylether-Derivat basierte Polyepoxidverbindung, ausgewählt aus der Gruppe bestehend aus 2-Phenyl-1,3-propandiol-Diglycidylether-Derivaten nach Anspruch 1 oder 2, und mindestens ein Epoxidharz, ausgewählt aus der Gruppe bestehend aus Diglycidylether von Bisphenol A, Diglycidylether von Bisphenol F, Diglycidylether von kernhydriertem Bisphenol A, Diglycidylether von kernhydriertem Bisphenol F, Tetraglycidylmethylendianilin, Kresol-Epoxidharz, Novolak-Epoxidharz und Triglycidylaminophenole und deren Oligomere.

17. Verwendung der härtbaren Epoxidharz-Zusammensetzung nach einem der Ansprüche 7 bis 13 zur Herstellung von Klebstoffen, Verbundwerkstoffen, Formkörpern oder Beschichtungen.

18. Verwendung einer 2-Phenyl-1,3-propandiol-Diglycidylether-Derivat basierten Polyepoxidverbindung, ausgewählt aus der Gruppe bestehend aus 2-Phenyl-1,3-propandiol-Diglycidylether-Derivaten nach Anspruch 1 oder 2, als Reaktivverdünner.

## Claims

1. A 2-phenyl-1,3-propanediol diglycidyl ether derivative of the formula I 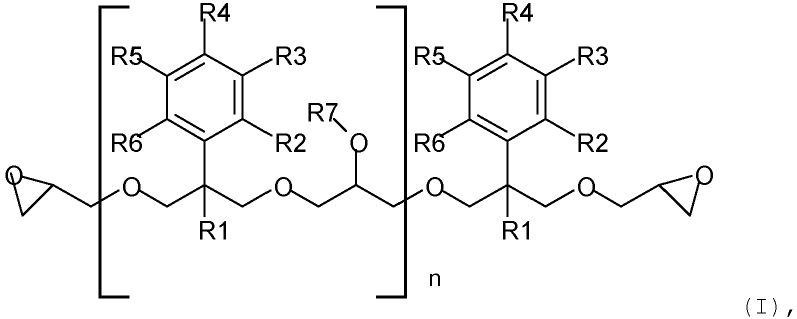 where
R1 is an alkyl group having 1 to 5 C atoms or an aryl group having 6 to 10 C atoms,
R2 to R6 independently of one another are each a hydrogen atom or an alkyl group having 1 to 4 C atoms,
R7 is a hydrogen atom or a glycidyl group, and
n is 0 to 30.

2. The 2-phenyl-1,3-propanediol diglycidyl ether derivative according to claim 1, where R1 is an alkyl group having 1 to 4 C atoms and R2 to R6 are each hydrogen atoms.

3. A process for preparing a 2-phenyl-1,3-propanediol diglycidyl ether derivative according to claims 1 or 2 comprising reacting a 2-phenyl-1,3-propanediol derivative of the formula II 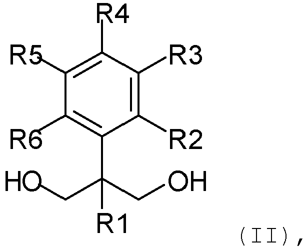 where R1 to R6 have the same definition as for the 2-phenyl-1,3-propanediol diglycidyl ether derivative, with epichlorohydrin.

4. A process for preparing a 2-phenyl-1,3-propanediol diglycidyl ether derivative-based oligomer, wherein a 2-phenyl-1,3-propanediol diglycidyl ether derivative according to claims 1 or 2 with n being 0, or a mixture of two or more 2-phenyl-1,3-propanediol diglycidyl ether derivatives according to claims 1 or 2 with different ns, where predominantly n is 0, is reacted with one or more diols.

5. A 2-phenyl-1,3-propanediol diglycidyl ether derivative-based oligomer, which is obtainable by reacting a 2-phenyl-1,3-propanediol diglycidyl ether derivative according to claims 1 or 2 where n is 0, or a mixture of two or more 2-phenyl-1,3-propanediol diglycidyl ether derivatives according to claims 1 or 2 with different ns, where predominantly n is 0, with one or more diols.

6. The 2-phenyl-1,3-propanediol diglycidyl ether derivative-based oligomer according to claim 5, where the one or more diols are not identical with the 2-phenyl-1,3-propanediol derivatives corresponding to the 2-phenyl-1,3-propanediol diglycidyl ether derivatives.

7. A curable epoxy resin composition comprising a curing component which comprises at least one curing agent, and a resin component which comprises at least one 2-phenyl-1,3-propanediol diglycidyl ether derivative-based polyepoxide compound selected from the group consisting of 2-phenyl-1,3-propanediol diglycidyl ether derivatives according to claims 1 or 2 and 2-phenyl-1,3-propanediol diglycidyl ether derivative-based oligomers according to claim 6.

8. The curable epoxy resin composition according to claim 7, wherein the resin component comprises at least one 2-phenyl-1,3-propanediol diglycidyl ether derivative-based polyepoxide compound selected from the group consisting of 2-phenyl-1,3-propanediol diglycidyl ether derivatives according to claims 1 or 2.

9. The curable epoxy resin composition according to claim 7 or 8, wherein the at least one curing agent is selected from the group consisting of amino curing agents and phenolic resin.

10. The curable epoxy resin composition according to any of claims 7 to 9, wherein the 2-phenyl-1,3-propanediol diglycidyl ether derivative-based polyepoxide compounds account in total for a fraction of at least 40 weight%, based on the overall resin component.

11. The curable epoxy resin composition according to any of claims 7 to 10, wherein the curable epoxy resin composition includes a fraction of less than 40 weight% of bisphenol A or F based compounds, based on the overall resin component.

12. The curable epoxy resin composition according to either of claims 8 and 9, wherein the resin component comprises at least one epoxy resin selected from the group consisting of diglycidyl ethers of bisphenol A, diglycidyl ethers of bisphenol F, diglycidyl ethers of ring-hydrogenated bisphenol A, diglycidyl ethers of ring-hydrogenated bisphenol F, tetraglycidylmethylenedianiline, cresol epoxy resin, novolac epoxy resin and triglycidylaminophenols and oligomers thereof.

13. The curable epoxy resin composition according to claim 12, wherein the 2-phenyl-1,3-propanediol diglycidyl ether derivative-based polyepoxide compounds make up a total proportion of up to 30% by weight.

14. A method for producing a cured epoxy resin, comprising curing the curable epoxy resin composition according to any of claims 7 to 13.

15. A cured epoxy resin obtainable by curing the curable epoxy resin composition according to any of claims 7 to 13.

16. A resin component comprising at least one 2-phenyl-1,3-propanediol diglycidyl ether derivative-based polyepoxide compound selected from the group consisting of 2-phenyl-1,3-propanediol diglycidyl ether derivatives according to claims 1 or 2, and at least one epoxy resin selected from the group consisting of diglycidyl ethers of bisphenol A, diglycidyl ethers of bisphenol F, diglycidyl ethers of ring-hydrogenated bisphenol A, diglycidyl ethers of ring-hydrogenated bisphenol F, tetraglycidylmethylenedianiline, cresol epoxy resin, novolac epoxy resin and triglycidylaminophenols and oligomers thereof.

17. The use of the curable epoxy resin composition according to any of claims 7 to 13 for producing adhesives, composite materials, moldings, or coatings.

18. The use of a 2-phenyl-1,3-propanediol diglycidyl ether derivative-based polyepoxide compound selected from the group consisting of 2-phenyl-1,3-propanediol diglycidyl ether derivatives according to claims 1 or 2 as a reactive diluent.

## Revendications

1. Dérivé de diglycidyléther de 2-phényl-1,3-propanediol de formule I 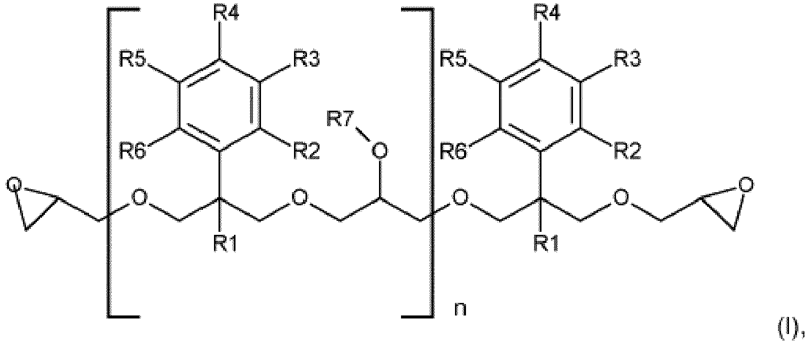
R1 étant un groupe alkyle comportant 1 à 5 atomes de C ou un groupe aryle comportant 6 à 10 atomes de C,
R2 à R6 étant indépendamment les uns des autres un atome d'hydrogène ou un groupe alkyle comportant 1 à 4 atomes de C,
R7 étant un atome d'hydrogène ou un groupe glycidyle, et
n = 0 à 30.

2. Dérivé de diglycidyléther de 2-phényl-1,3-propanediol selon la revendication 1, R1 étant un groupe alkyle comportant 1 à 4 atomes de C et R2 à R6 étant à chaque fois un atome d'hydrogène.

3. Procédé pour la préparation d'un dérivé de diglycidyléther de 2-phényl-1,3-propanediol selon la revendication 1 ou 2 comprenant la transformation d'un dérivé de 2-phényl-1,3-propanediol de formule II 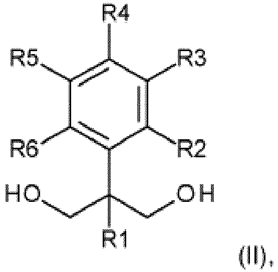 R1 à R6 possédant les mêmes significations comme pour le dérivé de diglycidyléther de 2-phényl-1,3-propanediol, avec de l'épichlorhydrine.

4. Procédé pour la préparation d'un oligomère à base d'un dérivé de diglycidyléther de 2-phényl-1,3-propanediol, un dérivé de diglycidyléther de 2-phényl-1,3-propanediol selon la revendication 1 ou 2 avec n = 0 ou un mélange de plusieurs dérivés de diglycidyléther de 2-phényl-1,3-propanediol selon la revendication 1 ou 2 avec différents n, dans lesquels majoritairement n = 0, étant transformé avec un ou plusieurs diols.

5. Oligomère à base d'un dérivé de diglycidyléther de 2-phényl-1,3-propanediol qui peut être obtenu par transformation d'un dérivé de diglycidyléther de 2-phényl-1,3-propanediol selon la revendication 1 ou 2 avec n = 0 ou d'un mélange de plusieurs dérivés de diglycidyléther de 2-phényl-1,3-propanediol selon la revendication 1 ou 2 avec différents n, dans lesquels majoritairement n = 0, avec un ou plusieurs diols.

6. Oligomère à base d'un dérivé de diglycidyléther de 2-phényl-1,3-propanediol selon la revendication 5, le ou les diols n'étant pas identiques aux dérivés de 2-phényl-1,3-propanediol correspondant aux dérivés de diglycidyléther de 2-phényl-1,3-propanediol.

7. Composition de résine époxy durcissable, comprenant un composant de durcisseur qui contient au moins un durcisseur, un composant de résine, qui contient au moins un composé de type polyépoxyde à base d'un dérivé de diglycidyléther de 2-phényl-1,3-propanediol choisi dans le groupe constitué par des dérivés de diglycidyléther de 2-phényl-1,3-propanediol selon la revendication 1 ou 2 et des oligomères à base de dérivé de diglycidyléther de 2-phényl-1,3-propanediol selon la revendication 6.

8. Composition de résine époxy durcissable selon la revendication 7, le composant de résine contenant au moins un composé de type polyépoxyde à base d'un dérivé de diglycidyléther de 2-phényl-1,3-propanediol choisi dans le groupe constitué par des dérivés de diglycidyléther de 2-phényl-1,3-propanediol selon la revendication 1 ou 2.

9. Composition de résine époxy durcissable selon la revendication 7 ou 8, l'au moins un durcisseur étant choisi dans le groupe constitué par un durcisseur de type amino et une résine phénolique.

10. Composition de résine époxy durcissable selon l'une quelconque des revendications 7 à 9, les composés de type polyépoxyde à base d'un dérivé de diglycidyléther de 2-phényl-1,3-propanediol représentant au total une proportion d'au moins 40 % en poids par rapport à l'ensemble du composant de résine.

11. Composition de résine époxy durcissable selon l'une quelconque des revendications 7 à 10, la composition de résine époxy durcissable présentant une proportion inférieure à 40 % en poids de composés à base de bisphénol A ou F par rapport à l'ensemble du composant de résine.

12. Composition de résine époxy durcissable selon l'une quelconque des revendications 8 et 9, le composant de résine contenant au moins une résine époxy choisie dans le groupe constitué par le diglycidyléther de bisphénol A, le diglycidyléther de bisphénol F, le diglycidyléther de bisphénol A à noyau hydrogéné, le diglycidyléther de bisphénol F à noyau hydrogéné, la tétraglycidylméthylènedianiline, une résine crésol-époxy, une résine novolak-époxy et des triglycidylaminophénols et leurs oligomères.

13. Composition de résine époxy durcissable selon la revendication 12, les composés de type polyépoxyde à base d'un dérivé de diglycidyléther de 2-phényl-1,3-propanediol représentant au total une proportion allant jusqu'à 30 % en poids.

14. Procédé pour la préparation d'une résine époxy durcie, comprenant le durcissement de la composition de résine époxy durcissable selon l'une quelconque des revendications 7 à 13.

15. Résine époxy durcie pouvant être obtenu par le durcissement de la composition de résine époxy durcissable selon l'une quelconque des revendications 7 à 13.

16. Composant de résine, comprenant au moins un composé de type polyépoxyde à base d'un dérivé de diglycidyléther de 2-phényl-1,3-propanediol, choisi dans le groupe constitué par des dérivés de diglycidyléther de 2-phényl-1,3-propanediol selon la revendication 1 ou 2, et au moins une résine époxy, choisi dans le groupe constitué par le diglycidyléther de bisphénol A, le diglycidyléther de bisphénol F, le diglycidyléther de bisphénol A à noyau hydrogéné, le diglycidyléther de bisphénol F à noyau hydrogéné, la tétraglycidylméthylènedianiline, une résine crésol-époxy, une résine novolak-époxy et des triglycidylaminophénols et leurs oligomères.

17. Utilisation de la composition de résine époxy durcissable selon l'une quelconque des revendications 7 à 13 pour la préparation d'adhésifs, de matériaux composites, de corps moulés ou de revêtements.

18. Utilisation d'un composé de type polyépoxyde à base d'un dérivé de diglycidyléther de 2-phényl-1,3-propanediol, choisi dans le groupe constitué par des dérivés de diglycidyléther de 2-phényl-1,3-propanediol selon la revendication 1 ou 2, en tant que diluant réactif.
